# FASCICULE DE BREVET EUROPEEN

(11) **EP 2 007 259 B1**
(45) Date de publication et mention de la délivrance du brevet: **04.08.2010**
(21) Numéro de dépôt: 07731310.4
(22) Date de dépôt: 18.04.2007
(51) Int. Cl.: A47J 42/14

(54) **APPAREIL A USAGE DOMESTIQUE POUR DIVISER ET DELIVRER UN PRODUIT PARCELLISE EN BRINS ET CONSERVE A L'ETAT SURGELE**
HAUSHALTSGERÄT ZUM ABTRENNEN UND AUSGEBEN EINES IN EINZELNE ZWEIGLEIN ZERTEILTEN UND IN GEFRORENEM ZUSTAND AUFBEWAHRTEN PRODUKTS
APPLIANCE FOR DOMESTIC USE FOR SPLITTING AND DISPENSING A PRODUCT BROKEN DOWN INTO INDIVIDUAL SPRIGS AND PRESERVED IN A FROZEN STATE

(30) Priorité: 19.04.2006 FR 0603433
(43) Date de publication de la demande: 31.12.2008
(73) Titulaire: Anjolus, 49330 Miré (FR)
(72) Inventeur: Nitzel-Henri, Eric, 49330 Miré (FR)
(74) Mandataire: Tournel, Jean Louis
(86) Numéro de dépôt international: PCT/FR2007/000645
(87) Numéro de publication internationale: WO 2007/122316

(56) Documents cités:
- DE-A1- 2 622 143
- FR-A- 1 253 288
- FR-E- 60 646
- GB-A- 2 392 899

## Description

### Domaine technique de l'invention.

La présente invention est du domaine des appareils à usage domestique pour diviser et délivrer un produit parcellisé, tel qu'une denrée alimentaire, un produit phytothérapique ou cosmétique; ou un produit analogue. Elle a pour objet un mécanisme adapté pour la division et la délivrance d'un tel produit parcellisé en brins ou analogue et conservé à l'état surgelé, ainsi qu'un appareil comprenant un récipient doté d'un tel mécanisme.

### Etat de la technique.

L'évolution des technologies a conduit à proposer sur le marché des denrées parcellisées en brins ou analogues tels qu'en petites feuilles, qui sont conservées par surgélation. Ces denrées sont notamment à base de végétaux en morceaux, qui sont utilisés comme denrées alimentaires, telles que des herbes aromatiques, ou qui sont utilisés en phytothérapie ou en cosmétique, voire dans d'autres domaines analogues. Pour permettre leur stockage à l'intérieur d'un congélateur domestique, de tels produits sont conditionnés dans des conteneurs en matériau cellulaire ou en matériau plastique, permettant à l'utilisateur de prélever extemporanément et rapidement une fraction de produit, puis de replacer ce produit à l'intérieur du congélateur.

Un problème posé réside dans le fait qu'à l'état de surgélation, le produit en brins s'agglomère en motte, ce qui rend sa délivrance malaisée. Cette mise en motte est favorisée par l'humidité intrinsèque du produit, qui tend à se décongeler lors de son utilisation hors du congélateur puis à se recongeler, une fois le produit replacé dans le congélateur. Cette mise en motte est de surcroît favorisée par l'humidité ambiante régnant hors du congélateur et à laquelle est soumis le produit à chaque prélèvement. Cette humidité vient se condenser et se congeler à la surface des particules surgelées et concourre à la formation des mottes

Un autre problème posé réside dans la conservation des qualités intrinsèques du produit, telles que ses qualités organoleptiques et microbiologiques. Il est donc nécessaire d'organiser la conservation du produit dans un milieu qui permette de préserver au mieux sa nature et sa structure. En outre, il est souhaitable de conditionner le produit parcellisé en morceaux pour conserver au mieux ses qualités, et de le diviser extemporanément pour libérer ses arômes lors de son utilisation.

Un autre problème posé réside dans la nature fortement aromatique du produit. Si le produit n'est pas conditionné dans un conteneur suffisamment imperméable aux échanges gazeux, cela conduit à une diffusion de ses arômes dans l'espace de stockage et à la contamination organoleptique des denrées stockées à proximité.

Un autre problème posé réside dans les exigences des consommateurs relatives à la sécurité et à l'hygiène alimentaire, ainsi qu'à la garantie d'intégrité du produit conservé dans le conteneur. Plus précisément, les consommateurs souhaitent que les modalités de stockage du produit garantissent le fait qu'il ne peut avoir été altéré et/ou dénaturé lors de son passage dans le circuit de distribution, notamment entre l'étape de son conditionnement et l'opération d'achat par le consommateur.

Parmi les appareils à usage domestique, on connaît ceux destinés à diviser et à délivrer un produit parcellisé. Un tel produit est notamment une denrée alimentaire à l'état de granulés ou de cristaux, telle que du poivre, des plantes ou des épices en grains, ou du sel. Il est à relever que de telles denrées alimentaires sont des produits plutôt secs et fermes, exception faite des produits en cristaux tel que le sel susceptibles d'être légèrement humide.

Ces appareils comportent couramment une réserve de produit agencée en conteneur ou récipient analogue, qui est équipé d'un mécanisme de division du produit. De manière courante, un tel mécanisme de division est du type par broyage, mettant en oeuvre une meule ou analogue qui associe deux pièces mobiles en rotation l'une par rapport à l'autre, dont une pièce fixe solidaire du conteneur et une pièce mobile manoeuvrable en rotation par l'utilisateur. Le produit parcellisé contenu dans le conteneur est introduit par gravité entre les deux pièces, pour y être broyé à partir d'une manoeuvre en rotation de la pièce mobile par l'utilisateur. Le matériau ainsi finement divisé est ensuite délivré par évacuation hors du mécanisme à travers des ouvertures que comporte la pièce fixe. De tels appareils sont par exemple décrits dans les documents FR60646 (BIRAMBEAU), FR1253288 (BIRAMBEAU), DE2622143 (ZASSENHAUS FA ROBERT), FR2865368 (POIVRIERES SALIERES PRODUCTION PSP) et FR2871674 (DUCROS).

Il apparaît que de tels appareils mettent en oeuvre une technique de broyage différant de notre invention, et qui n'est pas adaptée pour la division et la délivrance de produits parcellisés en brins, de végétaux notamment, qui de surcroît sont surgelés. Plus particulièrement, la division par broyage d'un produit conditionné en brins ou en feuilles conduit à une dégradation inesthétique de la structure du produit délivré, procure une libération inadaptée des arômes et rend difficile le dosage précis et régulier dudit produit.

Il apparaît que de tels appareils ne proposent pas un mécanisme de délivrance intégrant les moyens de confiner le contenu dans un contenant étanche, pendant la phase de stockage dudit contenu.

Il apparaît aussi que les appareils proposés sont d'une structure complexe qui rend leur industrialisation croûteuse. Une telle complexité de structure est le nombre important de pièces mises en oeuvre, induisent des coûts d'obtention de l'appareil qui sont importants, tant pour la fabrication des pièces que pour le montage de l'appareil. De tels coûts sont susceptibles d'être non seulement disproportionnés au regard des avantages procurés, mais aussi d'être rédhibitoires pour une utilisation unique consommable de ces appareils, c'est-à-dire pour une utilisation achevée après épuisement du contenu du récipient.

Il apparaît aussi que le nombre important de pièces et les modalités de broyage mises en oeuvre tendent à provoquer une usure prématurée des pièces et un grippage du mécanisme.

Il apparaît aussi qu'aucune garantie satisfaisante n'est offerte au regard de la sécurité et de l'hygiène alimentaire, ainsi qu'au regard de l'intégrité du produit conservé dans le conteneur.

Par ailleurs, il a déjà été proposé des mécanismes pour diviser des solides au moyen de deux platines en rotation l'une par rapport à l'autre, et dans lesquelles sont ménagées des ouvertures pour permettre le passage du produit, notamment FR60646, FR1253288 et DE2622143. Les platines de tels mécanismes ne sont pas en contact glissant mais au contraire comportent sur leurs faces en regard des aspérités qui permettent la division par cisaillement du produit admis entre ces platines. Il apparaît que l'utilisation d'aspérités n'est pas adaptée pour diviser un produit parcellisé en brins et de surcroît stocké à l'état surgelé à cause des risques de bourrage dudit produit dans ces aspérités, ce qui rendrait le mécanisme inopérant et ce qui conduirait à une accumulation d'un produit périssable au voisinage de la zone de délivrance. De plus, l'absence de contact glissant entre les platines, qu'interdit la présence des aspérités, ne permet pas d'obtenir une conformation du mécanisme selon laquelle les ouvertures ménagées sur les deux platines s'obturent réciproquement et définissent une fermeture étanche du mécanisme.

Par ailleurs encore, le problème de l'agglomération du produit à diviser préalablement à sa délivrance a été évoqué, notamment par FR2865368 qui décrit un moulin à sel. Tel que visé plus haut, les produits en cristaux sont susceptibles d'être légèrement humides, avec pour conséquence une agglomération possible des cristaux entre eux. FR2865368 propose de munir le moulin à sel d'un axe médian de manoeuvre de la pièce mobile, qui est équipé de pales radiales pour brasser le sel éventuellement aggloméré à l'intérieur du récipient. Ces pales s'étendent dans le volume intérieur du récipient, pour réaliser un brassage du sel qu'il contient à chacune des manoeuvres du mécanisme. Outre le fait que la transmission du couple de rotation se fait par un axe d'entraînement médian, ce qui complexifie l'appareil et augmente son coût de production, il apparaît que de telles modalités d'émottage du produit ne sont pas adaptées pour des produits du type de ceux susvisés en brins ou analogues tels qu'en feuilles, qui de surcroît sont surgelés. En effet, le produit parcellisé en brins et de surcroît stocké à l'état surgelé présente une tendance à l'agglomération supérieure à celle d'un produit en cristaux susceptible d'être légèrement humide, en raison de la nature même des forces physiques liant les agglomérats, voire en raison d'une concentration en eau intrinsèque au produit en brins, voire en raison d'un apport supérieur d'humidité intervenant lors des délivrances répétées du produit. Ledit produit serait ainsi susceptible d'adhérer à un mécanisme tel que décrit dans FR2865368 et de tourner solidairement avec celui-ci, le rendant par ce fait inopérant. En outre, dans le but de ne pas altérer la structure du produit, il n'est pas souhaitable de brasser uniformément l'ensemble du produit à chacune des manoeuvres du mécanisme mais plutôt d'établir une progressivité de l'intensité de ce brassage à mesure que ledit produit s'approche de la zone de délivrance.

Par ailleurs encore, il a été proposé d'interdire une échappée d'un reliquat de produit divisé en fin de manoeuvre du mécanisme de broyage. Par exemple, l'appareil est muni d'un capuchon de fermeture. Par exemple encore selon FR2871674, il a été proposé de munir la pièce mobile d'un obturateur des ouvertures que comporte la pièce fixe. Lorsque l'utilisateur manoeuvre en rotation la pièce mobile, l'obturateur est déplacé de manière à libérer l'ouverture. En fin d'utilisation, l'utilisateur manoeuvre la pièce mobile en sens inverse pour placer l'obturateur en regard des ouvertures et interdire une échappée du produit. Il apparaît que les modalités d'obturation des ouvertures sont contraignantes pour l'utilisateur, en raison d'un acte volontaire qu'il doit effectuer pour obturer les ouvertures, avec pour conséquence une fréquente négligence de la manoeuvre du mécanisme visant à obturer les ouvertures. En outre, l'obturation obtenue par un mécanisme tel que décrit dans FR2871674 n'apporte pas une étanchéité suffisante pour limiter efficacement les échanges gazeux, notamment d'arômes volatils, lors du stockage du contenu.

### Objet de l'invention.

Le but de la présente invention est de proposer un dispositif à usage domestique pour diviser et délivrer un produit parcellisé en brins ou analogue tel qu'en feuilles, et conservé à l'état surgelé.

Un tel produit est susceptible de présenter un taux d'humidité important, et d'être conditionné sous forme de morceaux allongés ou en feuilles. A titre indicatif de la destination privilégiée du dispositif de l'invention et des difficultés spécifiques à surmonter; le produit à diviser et à délivrer est un produit conditionné en morceaux, tel que des herbes aromatiques ou analogues, la valeur de l'une au moins des dimensions d'un même morceau étant susceptible de présenter un écart significatif, voire important, par rapport à la valeur des autres dimensions de ce morceaux

Le mécanisme de la présente invention est notamment destiné à être associé à un conteneur ou récipient contenant une réserve de produit parcellisé en morceaux. L'invention a aussi pour objet un appareil domestique pour diviser et délivrer un produit parcellisé en brins ou analogues et conservé à l'état surgelé, qui associe un tel mécanisme à un récipient. On notera parmi les difficultés spécifiques à surmonter que l'utilisation d'un tel appareil est répétée entre des périodes de stockage à l'intérieur d'un dispositif générateur de froid, congélateur domestique notamment. Un appareil permettant de faciliter la délivrance dudit produit parcellisé en brins ou analogues et conservé à l'état surgelé collaborera à réduire le temps d'utilisation de l'appareil, hors du dispositif générateur de froid et donc concourra à une meilleure conservation dudit produit.

Un autre but de la présente invention est de proposer de tels mécanismes et appareils dont les coûts d'obtention sont susceptibles de permettre économiquement leur utilisation consommable, sans porter atteinte ni à leur efficacité, ni à leur fiabilité, voire ni à une utilisation pérenne du mécanisme dans le cas où celui-ci n'est pas un article consommable.

Le dispositif de la présente invention est un dispositif adapté et fonctionnel pour la division et la délivrance d'un produit en morceaux, qui est notamment un produit en brins ou analogues conservé à l'état surgelé. Ce dispositif est par exemple du genre de ceux comportant des moyens de jonction au débouché d'un récipient et des moyens de parcellisation du produit associant au moins un couple de pièces mobiles en rotation l'une par rapport à l'autre, entre lesquelles pièces est parcellisé le produit. Une pièce est fixe par rapport au récipient et une pièce est mobile par rapport à la pièce fixe. On comprendra qu'indifféremment et selon différentes modalités d'utilisation du mécanisme visant à provoquer la mobilité relative entre les deux pièces, soit la pièce mobile est manoeuvrable en rotation par l'utilisateur, qui maintient par ailleurs immobile le récipient, soit le récipient est manoeuvré par l'utilisateur qui maintient par ailleurs immobile la pièce mobile. Au moins une fenêtre de délivrance est ménagée pour la délivrance hors du mécanisme du produit parcellisé.

Selon la présente invention, un mécanisme du genre susvisé est principalement reconnaissable en ce que les moyens de parcellisation associent successivement des moyens de fragmentation d'un agglomérat de produit et des moyens de division du type par découpe en cisaillement du produit entre au moins une lame ménagée sur la pièce mobile et au moins une contre lame ménagée sur la pièce fixe. Ces dispositions sont telles que le produit circule dans un premier temps à travers les moyens de fragmentation pour séparer les uns des autres les brins du produit, puis à travers les moyens de division pour segmenter les brins préalablement séparés du produit.

Selon une forme préférée de réalisation des moyens de fragmentation, ceux-ci associent au moins une pale tournante solidaire de la pièce mobile et au moins une contre pale solidaire de la pièce fixe, entre lesquelles pale et contre pale est cisaillé ledit agglomérat. Les bords en vis à vis des pale et contre pale sont susceptibles d'être arrondis pour éviter un déchirement des produits en brins lors de la défragmentation des agglomérats. De préférence, un écart est ménagé entre ces bords, de l'ordre de quelques millimètres, pour favoriser la défragmentation en évitant toutefois de broyer et/ou de déchirer les brins de produit. La mobilité des pales provoque une amenée des éventuels agglomérats de produit vers un environnement fixe, notamment la contre pale voire une paroi du mécanisme et/ou du récipient, pour cisailler délicatement entre eux les agglomérats.

Selon une autre forme de réalisation des moyens de fragmentation, prise seule ou en combinaison avec la précédente, ceux-ci associent au moins une pale tournante solidaire de la pièce mobile et une paroi périphérique polygonale. Une telle paroi est susceptible d'être constituée par la paroi du récipient. La fragmentation du produit est dans ce cas réalisée par cisaillement de l'agglomérat entre la tranche de l'extrémité de la pale tournante et la paroi, le produit étant entraîné depuis l'un au moins des coins du polygone vers une zone de cisaillement située en bordure de ce coin.

On notera que la pale et le cas échéant la contre pale sont notamment orientées radialement sensiblement dans des plans parallèles à l'axe de rotation de la pièce mobile, ces plans comprenant préférentiellement l'axe de rotation de la pièce mobile. Selon une forme perfectionnée de réalisation, l'une quelconque des pale et contre pale, et plus particulièrement la pale, est susceptible d'être incurvée et/ou inclinée dans son plan général d'extension. Par ailleurs, la tranche de la pale orientée vers le volume intérieur du récipient est susceptible d'être avantageusement biseautée et/ou inclinée pour favoriser la prise et l'entraînement des agglomérats de produit vers au moins la zone de fragmentation.

Selon une forme préférée de réalisation, les pales et/ou contre pales sont en pluralité. Notamment, dans le cas souhaité où le mécanisme est de profil polygonal, le nombre de pales et de contre pales, et le nombre de fenêtres de délivrance, sont en rapport avec le nombre de faces du polygone.

Selon une forme préférée de réalisation, la pale pénètre largement à l'intérieur du récipient tandis que les contre pales restent limitées au voisinage de la zone de délivrance. De la sorte, on obtient une progressivité dans l'intensité du cisaillement appliqué au produit, à mesure que celui-ci se rapproche de la zone de délivrance. Loin de la zone de délivrance, les agglomérats ne sont en effet cisaillés que faiblement par la pale seule tandis que près de la zone de délivrance, les agglomérats sont pris entre Ja pale et les contre pales, et subissent alors un cisaillement plus intense, afin de réduire les blocs de produit les plus fermement agglomérés.

Selon une forme préférée de réalisation des moyens de division, ceux-ci associent un couple de platines parallèles, l'une mobile et l'autre fixe. Ces platines sont notamment respectivement solidaires de la pièce mobile et de la pièce fixe, et sont disposées orthogonalement à l'axe de rotation de la pièce mobile, préférentiellement en contact glissant l'une contre l'autre. Les platines comportent chacune au moins une ouverture dont l'un au moins des bords est muni en correspondance de la lame et de la contre lame. Selon diverses variantes de réalisation, la lame et/ou la contre lame sont conformées en biseau et/ou sont microdenturées. Plus particulièrement, la lame et la contre lame sont susceptibles d'être chacune biseautées et/ou microdenturées, et/ou l'une quelconque de la lame et de la contre lame est biseauté tandis que l'autre quelconque de la lame et de la contre lame est microdenturée. Selon une forme particulière de réalisation, dans laquelle les moyens de division sont mis en oeuvre quel que soit le sens de rotation de la pièce mobile, les deux bords correspondant en vis-à-vis des ouvertures que comportent la platine fixe et la platine mobile sont agencés en lame et/ou contre lame.

On notera que sans déroger à la règle énoncée, un écart est susceptible d'être ménagé entre les platines, et que le contact glissant susvisé est à appréhender dans sa généralité au regard de la mobilité relative entre les platines en superposition l'une de l'autre. Un tel contact est néanmoins souhaité glissant pour favoriser l'étanchéité du mécanisme et faire obstacle à une éventuelle introduction d'humidité extérieure. Pour favoriser l'obtention d'un tel contact glissant, le mécanisme est susceptible d'être accessoirement équipé de moyens de placage des platines l'une vers l'autre, tels que des moyens élastiques et/ou des moyens de durcissement de leur mouvement relatif.

Selon une forme avantageuse de réalisation, la pale est notamment ménagée sur la platine mobile, et le cas échéant la contre pale est notamment ménagée sur la platine fixe. L'agencement du montage de la pale supportée par la platine mobile, permet de libérer la zone axiale de la tranche de la pale orientée vers le volume intérieur du récipient, pour favoriser la prise et l'entraînement des agglomérats de produit vers la zone où est opérée leur fragmentation. En outre, l'agencement du montage des pale et contre pale sur la platine qui leur est affectée permet de former par moulage la pièce fixe intégrant la contre pale, et la pièce mobile intégrant la pale. Il en ressort que le mécanisme est susceptible d'être constitué de deux pièces, et seulement de deux pièces, l'une fixe principalement constituée de la platine fixe munie de la contre pale et de l'ouverture correspondante, et l'autre mobile principalement constituée de la platine mobile munie de la pale et de l'ouverture correspondante. Selon des modalités particulières et avantageuses de montage du mécanisme développées plus loin, l'ouverture que comporte la platine mobile forme notamment la fenêtre de délivrance.

Le matériau constitutif des pièces fixe et mobile, et le cas échéant du récipient, est notamment un matériau plastique alimentaire, tel que polyoléfine ou analogue, qui n'altère pas les arômes du produit, qui procure une imperméabilité au regard d'une évaporation de ces arômes, et qui présente une résistance mécanique satisfaisante, notamment à la manipulation, aux chocs thermiques et à un environnement thermique inférieur ou égal à une température de l'ordre de -18°C. De préférence, le matériau constitutif des éléments du mécanisme, voire aussi du récipient, est identique pour l'ensemble de ces éléments pour faciliter les opérations de recyclage.

Selon une forme particulière de réalisation, la disposition de l'une quelconque au moins de la contre pale au moins et de la pale au moins sur la platine correspondante est asymétrique par rapport à deux ouvertures consécutives que comporte cette platine. Plus particulièrement, les distances de séparation d'une contre pale par rapport aux bords des ouvertures qui l'avoisinent sont différentes. Selon une disposition extrême de ces modalités de disposition de la contre pale au moins, celle-ci est alignée le long d'un bord d'une ouverture que comporte la platine correspondante. Il résulte du décalage de l'écart de la contre pale au moins vis-à-vis des ouvertures qui l'avoisinent que la quantité de produit délivré varie selon le sens de rotation de la pièce mobile, en raison des quantités de produit accumulées qui diffèrent de part et d'autre de la contre pale. Un tel aménagement est de préférence complété par une différence de grosseur des microdentures respectivement ménagées sur l'un et l'autre des bords en regard d'une même ouverture, pour faire varier la grosseur et la quantité des particules évacuées hors du mécanisme en fonction du sens de rotation de la pièce mobile.

La pièce mobile est avantageusement reliée à la pièce fixe par des moyens d'assemblage ruptible sous l'effet d'une première mise en rotation de la pièce mobile. Ces dispositions confèrent aux moyens d'assemblage une fonction de moyens de positionnement initial de la pièce mobile par rapport à la pièce fixe lors du montage du mécanisme. En outre, la pièce mobile étant assemblée à la pièce fixe, le mécanisme constitue un ensemble monobloc susceptible d'être aisément installé sur le récipient, en atelier. Un tel agencement des moyens d'assemblage permet de leur conférer une organisation en témoin d'effraction, qui garantit auprès du consommateur l'intégrité du produit contenu dans le récipient.

Selon un exemple de réalisation des moyens d'assemblage, ceux-ci associent des premiers reliefs coopérants, qui sont respectivement ménagés sur la pièce mobile et sur la pièce fixe. Le relief au moins ménagé sur la pièce fixe est préférentiellement disposé sur au moins une partie d'assemblage de cette dernière, qui est par exemple située à sa périphérie et qui est munie d'une zone de fragilisation. Cette zone de fragilisation est par exemple constituée d'une ligne de découpe le long de laquelle est conservée au moins un pont de rupture. Les reliefs coopérants sont avantageusement ménagés respectivement sur les faces en contact des platines, en étant constitués pour l'un d'au moins un ergot et pour l'autre d'un logement de réception de cet ergot. De telles dispositions favorisent un montage aisé du mécanisme, à partir d'un assemblage par poussée axiale de la pièce mobile sur la pièce fixe, et d'un clipage axial des pièces l'une à l'autre aisément réalisable de manière automatisée et/ou industrielle.

Selon d'autres modalités d'organisation des moyens d'assemblage, ceux-ci sont susceptibles de mettre en oeuvre des moyens de fixation du type par soudage, par collage ou technique analogue, entre au moins deux organes d'assemblage respectivement affectés à la pièce mobile et à la pièce fixe. Selon le même principe que celui visé plus haut, l'assemblage obtenu est facilement ruptible à partir d'une première manoeuvre du mécanisme par le consommateur, par exemple à partir d'une rupture d'au moins l'un des organes d'assemblage et/ou à partir d'une rupture de la zone d'assemblage entre ces organes.

L'ouverture de la platine fixe est notamment débouchante sur un évidement médian de la platine fixe, pour former un couloir de passage de la pale à son travers lors de l'assemblage, axial notamment, de la pièce mobile sur la pièce fixe.

On notera que les contre pales sont préférentiellement en pluralité, et que bien que pouvant être considérées comme optionnelles au regard des moyens de fragmentation, leur présence est d'autant plus souhaitable qu'elles constituent en outre des organes de renfort de la platine fixe qui se trouve fragilisée en raison de la présence du couloir au moins.

Selon une variante de réalisation des moyens de jonction, ceux-ci associent une intégration de la pièce fixe au récipient et des moyens d'assemblage entre la pièce fixe et la pièce mobile. De tels moyens d'assemblage sont par exemple du type par emboîtement ou analogue.

Selon une autre variante de réalisation des moyens de jonction, ceux-ci associent avantageusement la contre pale au moins, qui sont de préférence en pluralité et qui constituent des organes d'emboîtement du mécanisme à l'intérieur d'un goulot du récipient, et au moins un organe de prise axiale par emboîtement du corps de préhension sur le récipient. Un tel organe de prise axiale est indifféremment ménagé sur la pièce fixe et/ou sur la pièce mobile. Les contre pales sont notamment au moins au nombre de trois pour garantir un centrage satisfaisant du mécanisme sur le goulot. En outre, les tranches extérieures des contre pales sont susceptibles d'être munies de moyens d'accroche, tels que des reliefs agrippant et notamment tel qu'un crantage. Ces moyens d'accroche constituent des moyens d'interdiction d'un retrait du mécanisme hors du goulot, pour garantir l'intégrité du contenu du récipient muni en atelier du mécanisme, et éventuellement pour interdire une réutilisation du mécanisme avec un autre récipient dans le cas où l'ensemble du mécanisme monté sur le récipient est souhaité comme étant un article consommable. Le cas échéant et pour conforter le caractère consommable de cet ensemble, les contre pales et/ou l'organe de prise sont susceptibles de comporter une zone de fragilisation pour provoquer leur rupture en cas de retrait forcé du mécanisme hors du goulot.

Le mécanisme comporte notamment des moyens réversibles de fermeture étanche de la fenêtre de délivrance pour éviter une échappée du produit lorsque l'appareil n'est pas utilisé, et notamment pour éviter une dispersion du produit à l'intérieur du congélateur recevant l'appareil. De tels moyens de fermeture sont susceptibles d'être formés par un simple capuchon amovible ou analogue. Il est cependant préféré de mettre à profit la superposition en contact glissant des platines pour former ces moyens réversibles de fermeture de la fenêtre de délivrance.

Plus particulièrement, les platines comportent chacune une pluralité d'ouvertures, les zones radiales successives de séparation des ouvertures d'une platine constituant des volets d'obturation des ouvertures de l'autre platine. Les dits moyens de positionnement initial de la pièce mobile par rapport à la pièce fixe lors du montage du mécanisme sont des moyens pour positionner initialement les pièces fixe et mobile l'une par rapport à l'autre de sorte que les ouvertures soient obturées, jusqu'à une première manoeuvre du mécanisme par un utilisateur. Ces dispositions offrent une garantie du confinement du produit réalisé en atelier, ce confinement étant maintenu jusqu'à une manoeuvre volontaire exercée par un utilisateur. Accessoirement, un sceau est susceptible d'être apposé sur le mécanisme, tel qu'un manchon en matériau plastique thermorétractable, ou tel qu'un opercule thermoscellé sur la face extérieure de la platine mobile.

Le mécanisme est préférentiellement équipé de moyens d'incitation pour l'utilisateur d'une mise en superposition des volets et des ouvertures. Ces dispositions visent à limiter le risque d'une éventuelle négligence et/ou oubli de l'utilisateur à obturer les ouvertures, qui auraient pour conséquence de permettre une dispersion du produit pendant son stockage au congélateur et de favoriser l'introduction dans le mécanisme d'une humidité inopportune au regard de la nature de végétal en brins du produit et au regard des conditions de sa conservation à l'état surgelé.

De tels moyens d'incitation associent avantageusement des moyens de durcissement de la mobilité relative entre les deux pièces en position d'obturation des ouvertures, et des moyens d'incitation visuelle.

Plus particulièrement, les moyens d'incitation comprennent des moyens de durcissement de la mobilité de la pièce mobile en position de superposition des volets et des ouvertures. De tels moyens de durcissement sont par exemple constitués par des deuxièmes reliefs d'emboîtement respectivement ménagés pour un au moins sur la pièce fixe et pour un autre au moins sur la pièce mobile, qui coopèrent entre eux par clipage. Ces reliefs sont par exemple ménagés pour l'un sur la tranche de la platine fixe, et pour l'autre sur la tranche de la dite partie d'assemblage débouchante sur la ligne de découpe. Ces dispositions sont telles que lors de la rotation relative des pièces entre elles, la mise en coopération des deuxièmes reliefs constitue un frein à la dite mobilité, que l'utilisateur doit surmonter pour provoquer un franchissement de l'un des reliefs au-delà de l'autre en vue de dégager les dites ouvertures.

Plus particulièrement encore, les moyens d'incitation comprennent une conformation de non révolution du profil de la pièce mobile, et notamment du corps de préhension, et une conformation similaire du profil du récipient, de sorte qu'à une mise en prolongement des parois du récipient et de la pièce mobile corresponde une obturation des ouvertures. Ces dispositions sont telles qu'une incitation visuelle est procurée à l'utilisateur pour arrêter la manoeuvre de la pièce mobile lorsque les ouvertures sont obturées, à partir de la dite mise en prolongement qui est intuitivement réalisée.

Selon des exemples de réalisation mettant en évidence l'association entre les moyens de durcissement et les moyens d'incitation visuelle, les parties d'assemblage sont au nombre de quatre, l'enceinte ayant préférentiellement une section sensiblement carrée. Les ouvertures que comportent chacune des platines fixe et mobile sont au nombre de quatre, notamment disposées en croix. Les deuxièmes reliefs coopérants que comporte l'une quelconque de la pièce mobile et/ou de la pièce fixe sont en pluralité, tandis que ceux que comporte l'autre quelconque de la pièce mobile et de la pièce fixe sont en diviseur de ladite pluralité. On notera cependant que pour optimiser le durcissement obtenu, les nombres de reliefs coopérants sont en correspondance de l'un à l'autre des reliefs. Selon un premier exemple, les reliefs coopérants que comporte la pièce mobile et/ou fixe sont au nombre de deux. Dans ce cas, le durcissement du mouvement rotatif de la pièce mobile intervient tous les demi-tours. Selon un autre exemple de réalisation, les reliefs coopérants que comporte la pièce mobile et/ou la pièce fixe sont au nombre de quatre. Dans ce cas, le durcissement du mouvement rotatif de la pièce mobile intervient tous les quarts de tour. On notera que les deuxièmes reliefs coopérants que comporte la pièce mobile sont avantageusement ménagés sur l'une et/ou l'autre des parties d'assemblage, soit en alternance soit sur chacune d'entre elles, tandis que les deuxièmes reliefs coopérants que comporte la pièce fixe sont ménagés en correspondance sur cette dernière. Ces dispositions permettent un agencement aisé des moyens de durcissement, qui ne font pas obstacle à un montage axial de la pièce mobile sur la pièce fixe.

La présente invention porte aussi sur un appareil pour diviser et délivrer un produit en morceaux, comprenant un récipient sur lequel est monté un mécanisme comportant isolément ou en combinaison les caractéristiques qui viennent d'être décrites.

Les moyens de jonction sont indifféremment des moyens de jonction réversible, pour un rechargement de l'appareil par adjonction du mécanisme retiré d'un récipient vidé sur un nouveau récipient plein, et/ou des moyens de jonction irréversible, pour une utilisation de l'appareil jusqu'à épuisement du contenu du récipient. Le remplissage du récipient peut également être prévu par une ouverture refermable, indépendante du goulot du récipient supportant le mécanisme.

Un tel appareil est avantageusement composé en tout et pour tout de trois éléments, dont un premier élément constitué de la pièce mobile, dont un deuxième élément constitué de la pièce fixe, et dont un troisième élément constitué du récipient, ces éléments étant successivement reliés entre eux par emboîtement avantageusement axial.

### Description des figures.

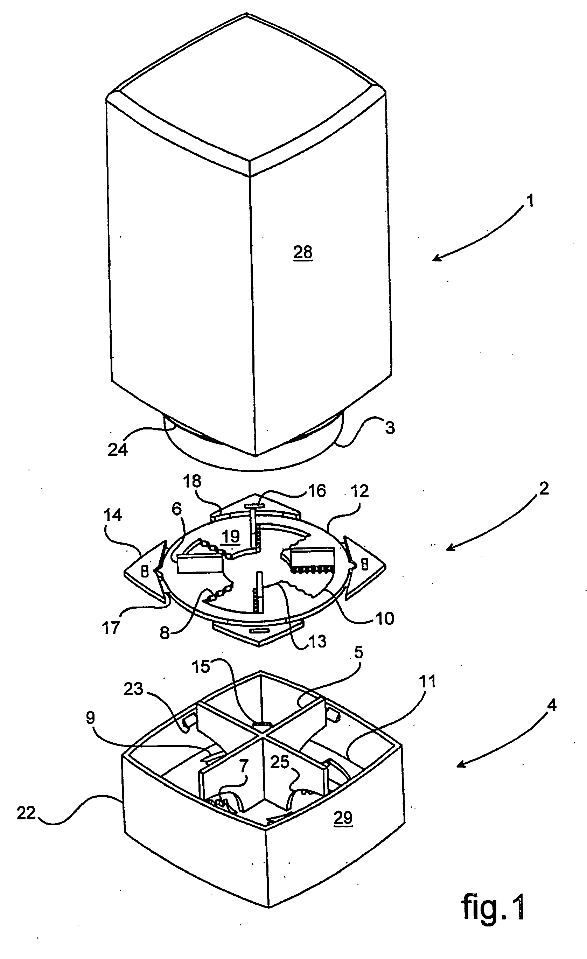

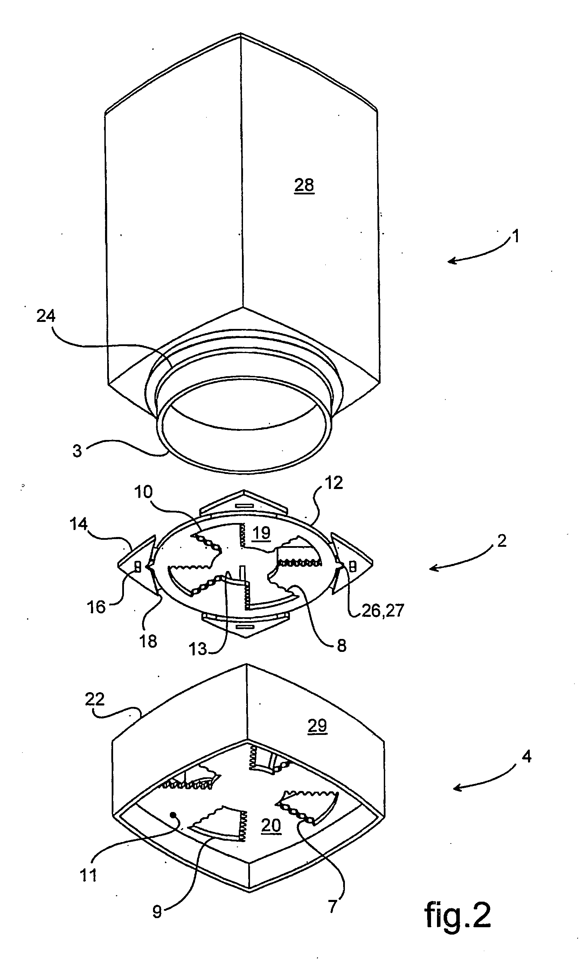

La présente invention sera mieux comprise, et des détails en relevant apparaîtront, à la lecture de la description qui va en être faite d'un exemple de réalisation, en relation avec les figures des planches annexées, dans lesquelles : Les fig.1 et fig.2 sont des vues en perspective éclatée respectivement de dessus et de dessous d'un moulin à herbes aromatiques selon la présente invention.

Les fig.3 et fig.4 sont des vues en perspective respectivement de dessus et de dessous d'une pièce fixe participante d'un mécanisme de division que comporte le moulin illustré sur les figures précédentes.

Les fig.5 et fig.6 sont des vues respectivement de dessous et de dessus de la pièce fixe illustrée sur les fig.3 et fig.4.

Les fig.7 et fig.8 sont des vues en perspective respectivement de dessus et de dessous d'une pièce mobile participante du mécanisme de division que comporte le moulin illustré sur les fig.1 et fig.2.

Les fig.9 et fig.10 sont des vues respectivement de dessous et de dessus de la pièce mobile illustrée sur les fig.7 et fig.8.

Sur les fig.1 et fig.2, un appareil est destiné à la division et à la délivrance d'un produit initialement parcellisé en brins ou analogue, telles que des herbes aromatiques, et conservé à l'état surgelé. Cet appareil est constitué en tout et pour tout de trois éléments aisément assemblables entre eux par emboîtement axial, dont un récipient 1 contenant le produit, une pièce fixe 2 destinée à être emboîtée sur un goulot 3 du récipient 1 et une pièce 4 mobile en rotation par rapport à la pièce fixe 2 et au récipient 1. La pièce mobile 4 est destinée à être manoeuvrée par un utilisateur pour fragmenter un éventuel agglomérat de produit, puis pour diviser par cisaillement les brins préalablement isolés les uns des autres et enfin pour délivrer les brins cisaillés.

Les moyens de fragmentation sont principalement constitués d'un jeu de pales 5 et de contre pales 6 qui sont respectivement solidaires de la pièce mobile 4 et de la pièce fixe 2. Les moyens de cisaillement sont quant à eux principalement constitués de lames 7 et de contre-lames microdenturées 8 qui sont ménagées en bordure d'ouvertures respectives 9 et 10 que comportent des platines mobile 11 et fixe 12, principalement constitutives respectivement de la pièce mobile 4 et de la pièce fixe 2.

Préalablement au montage de l'appareil, la pièce fixe 2 est assemblée axialement à la pièce mobile 4 pour former ensemble un mécanisme de division et de délivrance du produit. Ce mécanisme est ensuite assemblé axialement sur le récipient 1. A cet effet, les contre pales 6 de la pièce fixe 2 constituent des organes d'emboîtement et de centrage du mécanisme à l'intérieur du goulot 3 du récipient 1. Pour améliorer la fixité de l'assemblage entre le récipient 1 et les contre pales 6, notamment aux sollicitations de rotation, l'intérieur du goulot 3 peut être pourvu de reliefs qui encadrent les bords des contre pales en contact avec le goulot 3. Par ailleurs, la pièce mobile 4 comporte une enceinte 22 bordant la platine fixe 12, la section de cette enceinte 22 étant de conformation sensiblement polygonale, carrée notamment. Lorsque le mécanisme 2,4 est emboîté sur le récipient 1, l'enceinte 22 enveloppe le goulot 3 du récipient 1 et constitue un organe de préhension du mécanisme. La retenue axiale du mécanisme 2,4 sur le récipient 1 est obtenue au moyen de reliefs 23, tels que des ergots ou analogues, qui sont ménagés sur l'enceinte 22 et qui coopèrent avec une lèvre d'emboîtement 24 que comporte le goulot 3 du récipient 1. Ces reliefs 23 peuvent être conçus comme sécables, en cas de tentative d'arrachage du mécanisme après emboîtement. Les pales 5 sont notamment contenues dans le volume délimité par l'enceinte 22, mais peuvent néanmoins se prolonger vers l'intérieur du récipient 1 pour coopérer avec la paroi de ce dernier, en vue de provoquer une fragmentation initiale d'un éventuel agglomérat de produit.

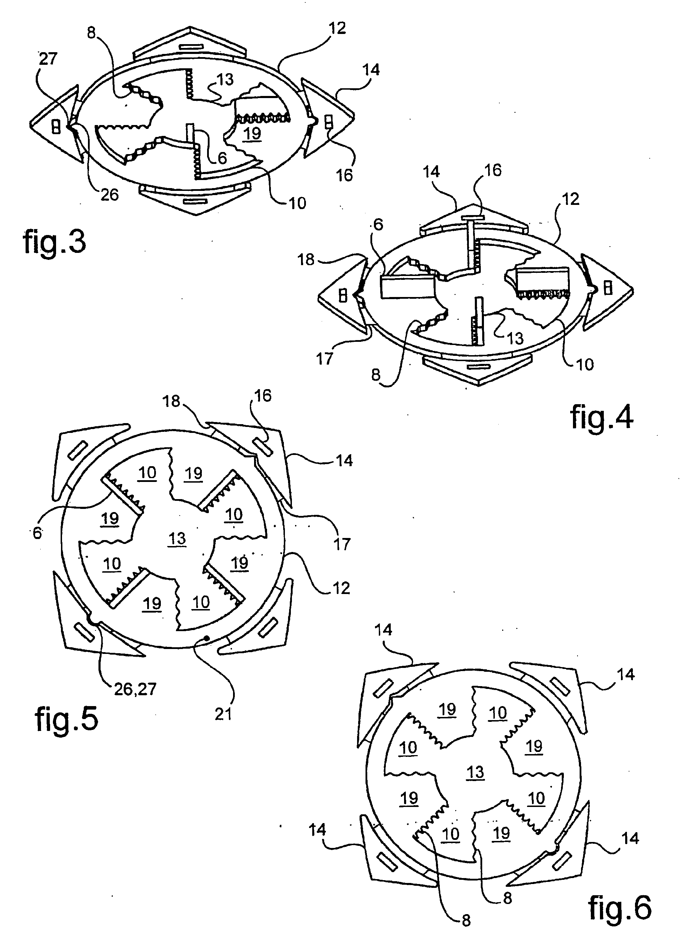

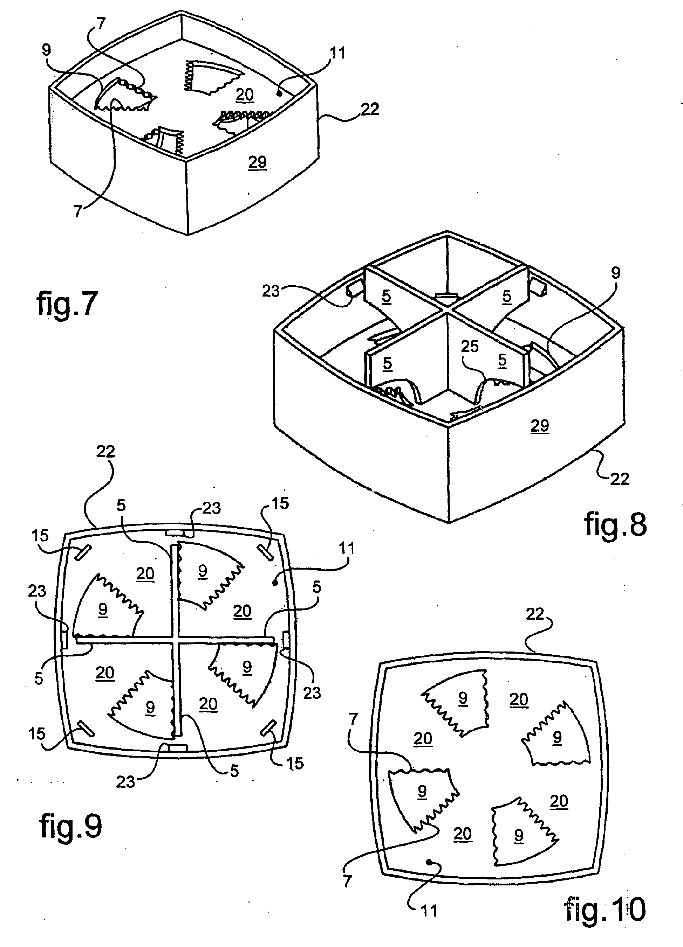

Sur les fig.3 à fig.10 plus particulièrement, la platine fixe 12 comporte quatre ouvertures 10. Chacune de ces ouvertures 10 est agencée en un secteur angulaire qui débouche sur un évidement médian 13, tel que circulaire, pour former une lumière globalement conformée en croix ou analogue. Les pales 5 de la pièce mobile 4 sont, dans cet exemple de réalisation, au nombre de quatre et sont agencées de manière similaire à la conformation en croix de la lumière que comporte la platine fixe 12. Cette lumière ménage des couloirs de passage respectifs des pales 5 à travers la platine fixe 12 lors du montage axial du mécanisme.

La platine fixe 12 comporte des moyens d'assemblage initial à la platine mobile 11, comprenant des parties d'assemblage 14 qui sont ménagées en périphérie de la platine fixe 12, dans une zone correspondante aux coins de l'enceinte 22 que comporte la pièce mobile 4. Ces moyens d'assemblage associent des premiers reliefs coopérants 15,16 comprenant quatre doigts 15 qui sont ménagés à la face supérieure de la platine mobile 11 et qui sont destinés à être emboîtés dans quatre orifices 16 correspondants respectivement ménagés dans les parties d'assemblage 14 de la platine fixe 12. La tranche extérieure de la platine fixe 12 est reliée à chacune des parties d'assemblage 14 par l'intermédiaire de ponts de rupture 17 qui sont ménagés au moins en partie le long de lignes de découpe 18 séparant la platine fixe 12 des différentes parties d'assemblage 14. Les ponts de rupture 17 sont destinés à être cassés lors d'une première manoeuvre de l'appareil par l'utilisateur, pour permettre le mouvement en rotation des parties d'assemblage 14 par rapport à la platine fixe 12, ces parties d'assemblage 14 étant maintenues solidaires de la platine mobile 11 par l'intermédiaire des premiers reliefs coopérants 15,16. Après rupture des ponts 27, les pièces fixe 2 et mobile 4 demeurent maintenues en position axiale relative l'une par rapport à l'autre par l'intermédiaire du récipient 1.

La pièce mobile 4 est assemblée à la pièce fixe 2 en étant disposée en contact l'une contre l'autre, de manière à induire un mouvement étroitement glissant de la face supérieure de la platine mobile 11 contre la face inférieure de la platine fixe 12. Un tel mouvement glissant permet non seulement de favoriser le cisaillement des brins entre les lames 7 et contre lames 8, mais aussi de garantir une étanchéité du mécanisme en position de fermeture des ouvertures 9 formant fenêtre de délivrance du produit. Cette fermeture est notamment obtenue par l'obturation des ouvertures 9 de la platine mobile 11 par des volets 19 formés par des zones de la platine fixe 12 séparant deux de ses ouvertures 10 consécutives. De même en position d'obturation des ouvertures 9 par les volets 19, les ouvertures 10 de la platine fixe 12 sont obturées par des volets 20 formés par des zones de la platine mobile séparant deux de ses ouvertures 9 consécutives. Les conformations des ouvertures 9,10 et des volets 19,20 sont analogues pour parfaire l'obturation des ouvertures 9,10 en position de fermeture du mécanisme. En position initiale d'assemblage des platines 11,12 entre elles, les ouvertures 9,10 sont obturées par les volets 19,20.

La pression de contact entre la face supérieure de la platine mobile 11 et la face inférieure de la platine fixe 12 peut être modulée en fonction de la position relative de ces deux pièces, par exemple en faisant varier l'épaisseur de la lèvre d'emboîtement 24 sur laquelle viennent s'appuyer les reliefs 23. Il est ainsi possible par exemple d'augmenter cette pression de contact au voisinage de la position de fermeture du mécanisme, à la fois pour améliorer l'efficacité du cisaillement entre les lames et contre lames 8 et pour améliorer l'étanchéité du mécanisme dans cette position de fermeture.

Lorsque l'utilisateur manoeuvre en rotation la pièce mobile 4, les ouvertures 9,10 des platines 11,12 sont alternativement placées en regard les unes des autres puis obturées par les volets 19,20. Les bords radiaux des ouvertures 9, 10 que comportent les platines 11,12 étant respectivement pourvus des lames 7 et des contre lames 8, la manoeuvre en rotation de la pièce mobile 4 permet de cisailler le produit lorsqu'il traverse les ouvertures 9,10 des platines fixe 12 et mobile 11. Après cisaillement, le produit est délivré hors de l'appareil en s'écoulant hors des ouvertures 9 de la pièce mobile 4, formant fenêtres de délivrance.

Les ouvertures 10 et les volets d'obturation 19 que comporte la platine fixe 12 sont situés dans une zone centrale de cette dernière, qui est interposée entre l'évidement médian 13 et une lèvre annulaire 21. Cette lèvre annulaire 21 est destinée à être élastiquement plaquée contre un buvant du goulot 3, lors du montage axial du mécanisme sur le récipient 1. Ce placage élastique résulte notamment de la prise d'appui antagoniste du mécanisme contre le goulot 3 du récipient, entre la prise d'appui des ergots 23 contre la lèvre d'emboîtement 24, et la prise d'appui de la lèvre annulaire 21 contre le buvant du goulot 3. La pièce mobile 4 est retenue axialement sur le récipient 1 après rupture des ponts 17 qui permettent l'assemblage initial de la pièce fixe 2 et de la pièce mobile 4 l'une à l'autre. La position de retenue axiale du mécanisme 2,4 sur le récipient 1 est en correspondance avec le positionnement axial des pièces fixe 2 et mobile 4 l'une par rapport à l'autre après rupture des ponts 17.

La face supérieure de la platine mobile 11 est équipée des quatre pales 5 qui sont ancrées à leur base en une zone axiale de la platine mobile 11. Le sommet des pales 5 est disponible pour constituer un organe de prise d'un éventuel agglomérat. Pour autoriser la mobilité relative entre elles des pales 5 et des contre pales 6, et ceci malgré l'ancrage axial des pales 5 sur la platine mobile 11, chaque pale 5 comporte un dégagement périphérique 25 constituant un passage pour les contre pales 6 lors de la mise en rotation de la pièce mobile 4. Un espace est ménagé entre les contre pales 6 et le chemin parcouru par les tranches des pales 5, pour former une zone dans laquelle la défragmentation des agglomérats de produit est réalisée de manière délicate.

Le mécanisme est manoeuvrable suivant les deux sens de rotation. Pour permettre un dosage respectif de la quantité de produit délivré en fonction du sens de rotation choisi par l'utilisateur, les contre pale 6 sont disposées sur la platine fixe 12 de manière asymétrique par rapport aux ouvertures 10 que comporte cette dernière. Cette asymétrie est à considérer au regard de la position des contre pales 6 par rapport aux ouvertures 10, et plus particulièrement au regard d'un écart différent séparant les contre pales 6 des bords de deux ouvertures 10 qui l'avoisinent de part et d'autre. Sur l'exemple de réalisation illustrée, cette asymétrie est optimisée dans la mesure où les contre pales 6 sont disposées en bordure d'une ouverture 10 respective, en étant au plus éloignées de l'autre ouverture 10 avoisinante. Le mécanisme fonctionnant suivant les deux sens de rotation, chacun des bords correspondant en regard d'une ouverture 10 est muni d'une contre lame 8. Pour de surcroît offrir à l'utilisateur un choix d'efficacité de cisaillement et de taille de division des brins selon le sens de rotation de la pièce mobile 4, les microdentures ménagées sur chacun des bords d'une ouverture 10 sont de tailles respectives.

L'appareil est muni de moyens d'incitation pour l'utilisateur d'une mise en superposition des volets 19,20 et des ouvertures 9,10 que comportent les platines 11,12. Ces moyens d'incitation comprennent des moyens de durcissement 26,27 de la mobilité de la pièce mobile 4 en position de superposition des volets 19,20 et des ouvertures 9,10. Les moyens de durcissement sont constitués de deuxièmes reliefs coopérants 26,27 respectivement ménagés sur la platine fixe 11 et sur la platine mobile 12. Sur l'exemple illustré, ces reliefs sont respectivement ménagés pour l'un 26 sur la tranche de la platine fixe 11, et pour l'autre 27 sur la tranche en regard des parties d'assemblage 14. Lorsque ces deuxièmes reliefs 26,27 sont emboîtés l'un dans l'autre par clipage, les volets 19,20 et les ouvertures 9,10 de l'une à l'autre des platines 11,12 sont placés en recouvrement. Pour libérer les ouvertures 9,10, l'utilisateur doit effectuer un effort supplémentaires pour dégager les deuxièmes reliefs 26,27 l'un de l'autre en vue de la poursuite de la manoeuvre en rotation de la pièce mobile 4. Ces moyens de durcissement 26,27 sont complétés par des moyens d'incitation visuelle, qui résident dans une mise en prolongement des faces latérales 28 que comporte le récipient 1 avec celles 29 de l'enceinte 22. Cette mise en prolongement correspond à une position d'obturation des ouvertures 9,10. Il en ressort que dans leur généralité, les moyens d'incitation visuelle sont principalement constitués d'une analogie de conformation de non révolution entre la conformation du récipient 1 et la conformation de l'enceinte 22. Plus particulièrement, l'enceinte 22 et le récipient 1 sont de section polygonale ou analogue, carrée sur l'exemple illustré, de sorte que la mise en prolongement des faces latérales 28,29 de l'enceinte 22 et du récipient 1 corresponde à une position d'obturation des ouvertures 9,10 par les volets 19,20. Ces dispositions incitent visuellement l'utilisateur à placer spontanément, en fin d'utilisation de l'appareil, les faces latérales 29 de l'enceinte 22 dans le prolongement des faces latérales 28 du récipient 1, pour libérer l'utilisateur d'une contrainte intellectuelle relative à une mise en position volontaire du mécanisme en position d'obturation des ouvertures 9,10.

## Revendications

1. Dispositif équipé d'un mécanisme pour diviser et délivrer un produit en morceaux, notamment d'un produit en brins ou analogue tel que des herbes aromatiques, conservé à l'état surgelé, ledit mécanisme comportant des moyens de jonction au débouché d'un récipient (1) et des moyens de parcellisation du produit associant au moins un couple de pièces (2,4) mobiles en rotation l'une par rapport à l'autre, entre lesquelles pièces (2,4) le produit est parcellisé, dont une pièce fixe (2) par rapport au récipient (1) et une pièce mobile (4) manoeuvrable en rotation par l'utilisateur ménagent au moins une fenêtre de délivrance pour la délivrance hors du mécanisme, du produit parcellisé, **caractérisé en ce que** les moyens de parcellisation associent successivement des moyens de fragmentation (5,6,29,28) d'un agglomérat de produit et des moyens de division (7,8) du type par découpe par cisaillement du produit entre au moins une lame (7) ménagée sur la pièce mobile (4) et au moins une contre lame (8) ménagée sur la pièce fixe (2), ledit mécanisme comprenant des moyens réversibles de fermeture étanche *constitués par des ouvertures et des volets.*

2. Dispositif équipé d'un mécanisme selon la revendication 1, **caractérisé en ce que** les moyens de fragmentation associent au moins une pale (5) tournante solidaire de la pièce mobile (4) et au moins une contre pale (6) solidaire de la pièce fixe (2), entre lesquelles pale (5) et contre pale (6) est cisaillé ledit agglomérat.

3. Dispositif équipé d'un mécanisme selon la revendication 1 ou 2, **caractérisé en ce que** les moyens de fragmentation associent au moins une pale (5) tournante solidaire de la pièce mobile (4) et une paroi périphérique polygonale (28,29).

4. Dispositif équipé d'un mécanisme selon l'une des revendications précédentes, **caractérisé en ce que** les moyens de division associent un couple de platines parallèles (11,12) dont l'une (11) est mobile et l'autre (12) est fixe, qui sont respectivement solidaires de la pièce mobile (4) et de la pièce fixe (2), ces platines (11,12) étant disposées en contact glissant l'une contre l'autre orthogonalement à l'axe de rotation de la pièce mobile (4) et comportant chacune au moins une ouverture (9,10) dont l'un au moins des bords est muni en correspondance de la lame (7) et de la contre lame (8).

5. Dispositif équipé d'un mécanisme selon la revendication 4, **caractérisé en ce que** la disposition de l'une quelconque au moins de la contre pale au moins (6) et de la pale (5) au moins sur la platine correspondante (12) est asymétrique par rapport à deux ouvertures (10) consécutives que comporte cette platine (12).

6. Dispositif équipé d'un mécanisme selon les revendications 4 et 5, **caractérisé en ce que** l'ouverture (9) que comporte la platine mobile (11) constitue la fenêtre de délivrance du produit, l'ouverture (10) de la platine fixe (12) étant débouchante sur un évidement médian (13) de la platine fixe (12) pour former un couloir de passage de la pale (5) à son travers lors de l'assemblage de la pièce mobile (4) sur la pièce fixe (2).

7. Dispositif équipé d'un mécanisme selon les revendications 4 et 6, **caractérisé en ce que** la platine mobile (11) est portée par un corps de préhension du mécanisme conformé en enceinte (22) logeant au moins partiellement les moyens de fragmentation.

8. Dispositif équipé d'un mécanisme selon l'une des revendications précédentes, **caractérisé en ce que** la pièce mobile (4) est reliée à la pièce fixe (2) par des moyens d'assemblage ruptibles sous l'effet d'une première mise en rotation de la pièce mobile (4).

9. Dispositif équipé d'un mécanisme selon l'une des revendications précédentes, **caractérisé en ce que** les moyens de jonction associent une intégration de la pièce fixe au récipient et des moyens d'assemblage entre la pièce fixe et la pièce mobile.

10. Dispositif équipé d'un mécanisme selon l'une des revendications 2 à 8, **caractérisé en ce que** les moyens de jonction associent une pluralité de contre pales (6) qui constituent des organes d'emboîtement du mécanisme (2,4) à l'intérieur d'un goulot (3) du récipient (1), et au moins un organe (23,24) de prise axiale par emboîtement du corps de préhension (22) sur le récipient (1).

11. Dispositif équipé d'un mécanisme selon l'une des revendications 4 à 10, **caractérisé en ce que** les platines (11,12) comportent chacune une pluralité d'ouvertures (9,10), les zones radiales constituant des volets d'obturation (19,20) des ouvertures (9,10) de l'autre platine (11,12).

12. Dispositif équipé d'un mécanisme selon la revendication 11, **caractérisé en ce qu'**il est pourvu de moyens d'incitation d'une mise en superposition des volets et des ouvertures lesdits moyens d'incitation comprenant des moyens de durcissement (26,27) de la mobilité de la pièce mobile (4) en position de superposition des volets (19,20) et des ouvertures (9,10).

13. Appareil pour diviser et délivrer un produit en morceaux **caractérisé en ce qu'**il comprend un récipient (1), lequel est surmonté d'un dispositif comportant un mécanisme selon l'une des revendications précédentes.

14. Appareil selon la revendication 13, **caractérisé en ce qu'**il comprend des moyens de jonction qui sont indifféremment des moyens de jonction réversible et/ou des moyens de jonction irréversible.

15. Appareil selon l'une des revendications 13 ou 14, **caractérisé en ce qu'**il est composé de trois éléments seulement, dont un premier élément est constitué de la pièce mobile (4), dont un deuxième élément est constitué de la pièce fixe (2), et dont un troisième élément est constitué d'un récipient (1), ces trois éléments étant successivement reliés entre eux par emboîtement axial.

## Claims

1. Device equipped with a mechanism for dividing and dispensing a product in pieces, particularly a product in strands or suchlike, such as aromatic herbs, stored in a frozen state, the said mechanism comprising the means of joining to the outlet of a receptacle (1) and the means of dividing the product into portions by connecting at least a pair of parts (2,4) free to rotate about each other, within which parts (2,4) the product is divided into portions, a part (2) of which fixed in relation to the receptacle (1) and a movable part (4) manoeuvrable by rotation by the user, creating at least one dispensing window to dispense out of the mechanism the product divided into portions, **characterised in that** the means of dividing into portions successively connect fragmentation means (5,6,29,28) of an agglomerate of the product and dividing means (7,8) of the cutting type by shearing the product between at least one blade (7) arranged on the movable part (4) and at least one counter-blade (8) arranged on the fixed part (2), the said mechanism comprising reversible sealed closing means formed by openings and shutters.

2. Device equipped with a mechanism according to claim 1, **characterised in that** the fragmentation means connect at least one rotating vane (5) integral with the movable part (4) and at least one counter-vane (6) integral with the fixed part (2), between which vane (5) and counter-vane (6) the said agglomerate is sheared.

3. Device equipped with a mechanism according to claim 1 or 2, **characterised in that** the fragmentation means connect at least one rotating vane (5) integral with the movable part (4) and a polygonal peripheral wall (28,29).

4. Device equipped with a mechanism according to one of the preceding claims, **characterised in that** the dividing means connect a pair of parallel plates (11, 12) one of which (11) is movable and the other (12) is fixed, which are integral with the movable part (4) and the fixed part (2) respectively, these plates (11,12) being arranged in sliding contact with each other orthogonally to the axis of rotation of the movable part (4) and each comprising at least one opening (9,10) of which at least one of the edges is correspondingly fitted with the blade (7) and the counter-blade (8).

5. Device equipped with a mechanism according to claim 4, **characterised in that** the arrangement of at least any one of the counter-vanes (6) at least *[sic]* and at least the vane (5) on the corresponding plate (12) is asymmetrical in relation to two consecutive openings (10) that this plate (12) comprises.

6. Device equipped with a mechanism according to claims 4 and 5, **characterised in that** the opening (9) that the movable plate (11) comprises constitutes the product dispensing window, the opening (10) of the fixed plate (12) running into a middle cavity (13) of the fixed plate (12) to form a passageway of the vane (5) through it on fitting the movable part (4) onto the fixed part (2).

7. Device equipped with a mechanism according to claims 4 and 6, **characterised in that** the movable plate (11) is carried by a gripping body of the mechanism in the form of an enclosure (22) housing the fragmentation means at least partially.

8. Device equipped with a mechanism according to one of the preceding claims, **characterised in that** the movable part (4) is connected to the fixed part (2) by assembly means that are breakable under the effect of a first rotation of the movable part (4).

9. Device equipped with a mechanism according to one of the preceding claims, **characterised in that** the connecting means connect an integration of the fixed part to the receptacle and assembly means between the fixed part and the movable part.

10. Device equipped with a mechanism according to one of claims 2 to 8, **characterised in that** the means of connection connect a plurality of counter-vanes (6) which constitute encasing organs of the mechanism (2,4) inside a neck (3) of the receptacle (1), and at least one axial encasing retaining organ (23,24) of the gripping body (22) on the receptacle (1).

11. Device equipped with a mechanism according to one of claims 4 to 10, **characterised in that** the plates (11, 12) each comprise a plurality of openings (9,10), the radial areas constituting shutters (19,20) blocking the openings (9,10) of the other plate (11,12).

12. Device equipped with a mechanism according to claim 11, **characterised in that** it has means of inducing the superposition of the shutters and openings, the said inducing means comprising means (26,27) of stiffening the mobility of the movable part (4) in the position of superposition of the shutters (19,20) and openings (9,10).

13. Appliance for dividing and dispensing a product in pieces **characterised in that** it comprises a receptacle (1), which is surmounted by a device comprising a mechanism according to one of the preceding claims.

14. Appliance according to claim 13, **characterised in that** it comprises connecting means which are indiscriminately reversible means of connection and/or irreversible means of connection.

15. Appliance according to one of claims 13 or 14, **characterised in that** it comprises only three elements, of which a first element consists of the movable part (4), of which a second element consists of the fixed part (2), and of which a third element consists of a receptacle (1), these three elements being successively connected together by axial encasing.

## Patentansprüche

1. Vorrichtung, ausgestattet mit einem Mechanismus zum Zerteilen und Ausgeben eines stückigen Produkts, insbesondere eines faserartigen Produkts oder ähnlichem, wie zum Beispiel Gewürzkräuter, das in gefrorenem Zustand aufbewahrt wird, wobei der Mechanismus Verbindungsmittel am Auslass eines Behälters (1) und Mittel zum Zerkleinern des Produkts umfasst, die wenigstens ein Paar bezüglich einander drehbewegliche Teile (2, 4) vereinen, wobei das Produkt zwischen diesen Teilen (2, 4) zerkleinert wird, von denen ein Teil (2) bezüglich des Behälters (1) feststehend ist und ein bewegliches Teils (4) vom Benutzer durch Drehen betätigt wird, in dem wenigstens ein Ausgabefenster zur Ausgabe des zerkleinerten Produkts aus dem Mechanismus ausgebildet ist, **dadurch gekennzeichnet, dass** die Zerkleinerungsmittel nacheinander Mittel (5, 6, 29, 28) zum Zerstückeln eines zusammengepressten Produkts und Mittel (7, 8) zum Zerteilen vereinen, in der Art durch Zerschneiden des Produkts zwischen wenigstens einer an dem beweglichen Teil (4) ausgebildeten Schneide (7) und wenigstens einer an dem feststehenden Teil (2) ausgebildeten Gegenschneide (9), wobei der Mechanismus reversible Mittel zum dichten Verschließen umfasst, die durch Öffnungen und Klappen gebildet sind.

2. Vorrichtung, ausgestattet mit einem Mechanismus nach Anspruch 1, **dadurch gekennzeichnet, dass** die Zerstückelungsmittel wenigstens ein mit dem beweglichen Teil fest verbundenes drehbares Flügelrad (5) und wenigstens ein mit dem feststehenden Teil (2) fest verbundenes Gegenflügelrad (6) vereinen, wobei das zusammengepresste Produkt zwischen dem Flügelrad (5) und dem Gegenflügelrad (6) zerschnitten wird.

3. Vorrichtung, ausgestattet mit einem Mechanismus nach Anspruch 1 oder 2, **dadurch gekennzeichnet, dass** die Zerstückelungsmittel wenigstens ein mit dem beweglichen Teil (4) fest verbundenes drehbares Flügelrad (5) und eine polygonale Umfangswand (28, 29) vereinen.

4. Vorrichtung, ausgestattet mit einem Mechanismus nach einem der vorhergehenden Ansprüche, **dadurch gekennzeichnet, dass** die Zerteilungsmittel ein Paar paralleler Platten (11, 12) vereinen, von denen eine (11) beweglich und die andere (12) feststehend ist, die mit dem beweglichen Teil (4) bzw. mit dem feststehenden Teil (2) fest verbunden sind, wobei die Platten (11, 12) orthogonal zur Drehachse
des beweglichen Teils (4) in gleitendem Kontakt zueinander angeordnet sind und jeweils wenigstens eine Öffnung (9, 10) aufweisen, an der wenigstens einer der Ränder mit der Schneide (7) bzw. der Gegenschneide (8) in gegenseitiger Übereinstimmung versehen ist.

5. Vorrichtung, ausgestattet mit einem Mechanismus nach Anspruch 4, **dadurch gekennzeichnet, dass** die Anordnung von wenigstens irgendeinem zumindest des Gegenflügelrads (6) bzw. zumindest des Flügelrads (5) auf der korrespondierenden Platte (12) bezüglich zwei aufeinanderfolgender Öffnungen (10), welche die Platte (12) aufweist, asymmetrisch ist.

6. Vorrichtung, ausgestattet mit einem Mechanismus nach den Ansprüche 4 und 5, **dadurch gekennzeichnet, dass** die Öffnung (9), welche die bewegliche Platte (11) aufweist, das Fenster zur Ausgabe des Produkts bildet, wobei die Öffnung (10) der feststehenden Platte (12) in eine mittige Aussparung (13) der feststehenden Platte (12) mündet, um bei der Montage des beweglichen Teils (4) an dem feststehenden Teil (2) einen Durchgang zum Hindurchführen des Flügelrades (5) zu bilden.

7. Vorrichtung, ausgestattet mit einem Mechanismus nach den Ansprüche 4 und 6, **dadurch gekennzeichnet, dass** die bewegliche Platte (11) von einem Körper zum Greifen des Mechanismus getragen ist, der als Umschließung (22) ausgebildet ist, in der die Zerstückelungsmittel wenigstens zum Teil gelagert sind.

8. Vorrichtung, ausgestattet mit einem Mechanismus nach einem der vorhergehenden Ansprüche, **dadurch gekennzeichnet, dass** das bewegliche Teil (4) mit dem feststehenden Teil (2) durch Montagemittel verbunden ist, die unter der Einwirkung einer ersten Drehbewegung des beweglichen Teils (4) brechbar sind.

9. Vorrichtung, ausgestattet mit einem Mechanismus nach einem der vorhergehenden Ansprüche, **dadurch gekennzeichnet, dass** die Verbindungsmittel eine Integrierung des feststehenden Teils in dem Behälter und Montagemittel zwischen dem feststehenden Teil und dem beweglichen Teil vereinen.

10. Vorrichtung, ausgestattet mit einem Mechanismus nach einem der Ansprüche 2 bis 8, **dadurch gekennzeichnet, dass** die Verbindungsmittel eine Vielzahl von Gegenflügelrädern (6) vereinen, die Organe zum Einstecken des Mechanismus (2, 4) innen in einen Hals (3) des Behälters (1) bilden, und wenigstens ein Organ (23, 24) zum axialen Eingriff durch Aufstecken des Greifkörpers (22) auf den Behälter (1).

11. Vorrichtung, ausgestattet mit einem Mechanismus nach einem der Ansprüche 4 bis 10, **dadurch gekennzeichnet, dass** die Platten (11, 12) jeweils eine Vielzahl von Öffnungen (9, 10) aufweisen, wobei die Radialbereiche Klappen (19, 20) zum Verschließen der Öffnungen (9, 10) der anderen Platte (11, 12) bilden.

12. Vorrichtung, ausgestattet mit einem Mechanismus nach Anspruch 11, **dadurch gekennzeichnet, dass** Mittel vorgesehen sind, die einen Anreiz zum Übereinanderlagern der Klappen und Öffnungen bieten, wobei die Anreizmittel Mittel (26, 27) zum Verfestigen der Beweglichkeit des beweglichen Teils (4) bei übereinanderliegender Stellung der Klappen (19, 20) und der Öffnungen (9, 10) aufweisen.

13. Gerät zum Zerteilen und Ausgeben eines stückigen Produkts, **dadurch gekennzeichnet, dass** es einen Behälter (1) umfasst, über dem eine Vorrichtung angeordnet ist, die einen Mechanismus nach einem der vorhergehenden Ansprüche umfasst.

14. Gerät nach Anspruch 13, **dadurch gekennzeichnet, dass** es Verbindungsmittel umfasst, die gleichermaßen reversible und/oder irreversible Verbindungsmittel sind.

15. Gerät nach einem der Ansprüche 13 oder 14, **dadurch gekennzeichnet, dass** es von nur drei Elementen gebildet ist, von denen ein erstes Element von dem beweglichen Teil (4) gebildet ist, von denen ein zweites Element von dem feststehenden Teil (2) gebildet ist und von denen ein drittes Element von einem Behälter (1) gebildet ist, wobei diese drei Elemente nacheinander durch axiales Aufstecken miteinander verbunden sind.
